# EUROPEAN PATENT SPECIFICATION

(11) **EP 4 570 360 B1**
(45) Date of publication and mention of the grant of the patent: **28.01.2026**
(21) Application number: 23216903.7
(22) Date of filing: 14.12.2023
(51) Int. Cl.: B01D 53/94, B01J 23/58, B01J 29/70, B01J 35/00, B01J 35/57, B01J 37/02, B01J 37/03, B01J 37/08, F01N 3/10

(54) **LOW PGM LOADED DIESEL OXIDATION CATALYST FOR EXOTHERM GENERATION**
MIT NIEDRIGEM PGM BELADENER DIESELOXIDATIONSKATALYSATOR ZUR EXOTHERMERZEUGUNG
CATALYSEUR D'OXYDATION DIESEL CHARGÉ À FAIBLE TENEUR EN PGM POUR LA GÉNÉRATION D'EXOTHERMIE

(43) Date of publication of application: 18.06.2025
(73) Proprietor: Johnson Matthey Public Limited Company, London EC2V 7AD (GB)
(72) Inventor: CHIFFEY, Andrew Francis, Royston, SG8 5HE (GB); COOPER, Oliver, Royston, SG8 5HE (GB); CORRIGAN, Chris, Royston, SG8 5HE (GB); GHOLAMI, Rahman, Royston, SG8 5HE (GB); MOREAU, Francois, Royston, SG8 5HE (GB); PINTO, Jose Jorge Baeta Fontinha, Royston, SG8 5HE (GB)
(74) Representative: Johnson Matthey Plc

(56) References cited:
- EP-A1- 4 201 517
- WO-A1-2012/156883
- US-A1- 2009 288 402
- US-A1- 2017 216 770
- US-A1- 2018 001 306
- US-A1- 2022 379 293
- US-A1- 2023 104 565

## Description

### FIELD OF THE INVENTION

The present invention relates to a diesel oxidation catalyst for use in an exhaust system of a heavy-duty diesel engine for: oxidising carbon monoxide (CO) and hydrocarbons (HC) to carbon dioxide (CO₂) and water (H₂O), particularly the generation of an exotherm from HC for heating a filter substrate in the exhaust system disposed downstream from the oxidation catalyst; and oxidising nitrogen monoxide (NO) to nitrogen dioxide (NO₂) in exhaust gas emitted from the heavy-duty diesel engine. More particularly, the invention relates to a diesel oxidation catalyst comprising a monolith substrate, preferably a flow-through substrate, having a first (inlet) substrate end and a second (outlet) substrate end and an axial length extending therebetween, a first washcoat zone comprising both platinum and palladium extending from the first substrate end to less than the axial length of the monolith substrate; and a second washcoat layer comprising platinum or both platinum and palladium extending from the second substrate end to less than the axial length of the monolith substrate.

### BACKGROUND TO THE INVENTION

Combustion engines produce exhaust gases that contain pollutants, such as carbon monoxide (CO), unburned hydrocarbons (HCs), oxides of nitrogen (NOₓ) and particulate matter (PM). Emissions standards for pollutants in an exhaust gas produced by a combustion engine, particularly for vehicular engines, are becoming increasingly stringent. There is a need to provide improved catalysts and exhaust systems for treating and removing the pollutants in such exhaust gases that can meet these standards and which are cost-effective.

The exhaust gas from vehicular gasoline and diesel engines is commonly treated with a catalyst that can oxidise: (i) carbon monoxide (CO) to carbon dioxide (CO₂); and (ii) hydrocarbons (HCs) to water (H₂O) and carbon dioxide (CO₂). Three-way catalysts (TWCs) are typically employed to treat the exhaust gas from a gasoline (spark ignition) engine by reducing oxides of nitrogen (NOₓ) to nitrogen (N₂), water (H₂O) and carbon dioxide (CO₂) simultaneously with the oxidation reactions (i) and (ii). Three-way catalysts typically include rhodium for promoting the reduction of oxides of nitrogen (NOₓ) in exhaust gas; and an oxygen storage component (OSC), typically based on an oxide or a mixed oxide containing cerium, for absorbing and releasing oxygen in exhaust gas that is slightly lean or slightly rich of a stoichiometric operating condition of the gasoline engine emitting the exhaust gas.

Compared with a gasoline engine, the exhaust gas from a compression ignition engine, such as a diesel engine, is oxygen rich because the combustion process is lean of stoichiometric fuel combustion. The exhaust gas is typically treated with an exhaust system comprising an oxidation catalyst (commonly called a diesel oxidation catalyst (DOC)) that performs oxidation reactions (i) and (ii) described hereinabove. Some diesel oxidation catalysts are also designed to oxidise nitrogen monoxide (NO) to nitrogen dioxide (NO₂), which can aid removal of NOₓ using an additional, downstream emissions control device, typically a selective catalytic reduction (SCR) catalyst and .

Generally, vehicular diesel engines are categorised by relevant emission legislation around the World according to their duty cycle. Very generally, diesel engines for passenger vehicles are referred to as "light-duty diesel" vehicles, whereas diesel engines for trucks and buses etc. are classed as "heavy-duty diesel" engines. Emission test cycles for light-duty diesel engines typically include a so-called "cold start" test to test for HC emissions, e.g. in the New European Driving Cycle (NEDC) or as the MVEG-B test, whereas emission tests for heavy-duty diesel engines do not, principally because the parts per million (ppm) quantity of hydrocarbons emitted by heavy-duty diesel engines is approximately ten times lower than in light-duty diesel engines. This difference has led technologists to include zeolite components in light-duty diesel oxidation catalysts for adsorbing hydrocarbons in exhaust gas emitted at "cold start" that are later desorbed as the catalyst temperature increases when the catalyst as a whole becomes active for HC oxidation (see e.g. WO96/040419A1). However, because of the relatively low ppm hydrocarbons emitted by heavy-duty diesel engines, zeolites are generally not required in heavy-duty diesel oxidation catalyst formulations to meet the required emission standards. Since there is no known technical advantage for including zeolites in heavy-duty diesel oxidation catalysts and also in view of the relatively high cost of zeolite raw materials compared with typical catalyst washcoat materials, such as aluminas, zeolites are generally not included in commercial heavy-duty diesel oxidation catalyst formulations.

Filter substrates are included in exhaust systems of diesel engines for meeting emission standards for particulate matter. Particulate matter trapped on filter substrates generally needs to be removed by combustion thereof in order to maintain acceptable backpressure in the exhaust system as a whole. The process of combusting particulate matter on a filter substrate is referred to in the art as "regeneration".

Regeneration techniques can be broadly divided into the categories of passive, active and combinations of both passive and active. In passive systems, the oxidation temperature of the particulate matter is lowered to a level where the filter can be auto-regenerated during regular vehicle operation. Examples of such passive systems include catalysing the filter medium; addition of a catalyst fuel additive so that the particulate matter generated by the engine contains catalyst for promoting the self-combustion of the particulate matter; and generating nitrogen dioxide (NO₂) upstream of the filter for combusting the particulate matter held on the filter: particulate matter combusts in NO₂ at lower temperatures than in oxygen. This is the so-called CRT^{®} effect (see e.g. EP0341832).

Active systems actively trigger filter regeneration by raising the temperature of particulate matter trapped in the filter. In practice, this can be done on a vehicle by combusting hydrocarbon fuel already carried on the vehicle and/or by electric heating. Two methods for combusting fuel include in-cylinder engine management methods, such as late-cycle injection of additional fuel; or injection and combustion of fuel in the exhaust gas, i.e. after the exhaust gas has exited the engine cylinder itself.

In passive-active systems, the "passive" filter catalyst or upstream (CRT^{®} effect-promoting) NO oxidation catalyst etc. allows active regeneration to be performed at lower exhaust gas temperatures and/or for shorter durations compared to non-catalytic active systems. In either case, the fuel economy penalty associated with active regeneration can be minimized: net savings including the additional cost of the catalyst. Regeneration at a lower temperature can also lower thermal stress and increase the lifespan of the filter.

The present invention relates to an oxidation catalyst for generating an exotherm from combustion of hydrocarbons in "passive-active" exhaust systems.

Applicant's WO2014/132034A1, WO2020/260669A1 and WO2021/074605A1 disclose an oxidation catalyst comprising a catalyst layer having a non-uniform distribution of a first noble metal, e.g. palladium, in a direction perpendicular to a surface of a substrate.

US patent publication no. 2012/213674A1 discloses a catalyst for purifying the exhaust gases from diesel engines, in particular an oxidation catalyst which is particularly well suited for the purification of exhaust gases from heavy goods vehicles when further exhaust gas purification units such as a particle filter and/or a nitrogen oxide reduction catalyst are installed downstream thereof. The catalyst contains two catalytically active coatings which have different compositions and of which only one is in direct contact with the outflowing exhaust gas. The coating (1) which is in direct contact with the outflowing exhaust gas is platinum-rich and contains a total amount of noble metal (platinum and palladium) which is greater than that in the coating (2) which is not in direct contact with the outflowing exhaust gas. The disclosure alleges that the platinum-rich coating (1) displays an extremely high oxidizing power, in particular in the NO oxidation, while the coating (2) which is not in direct contact with the outflowing exhaust gas ensures a good "heat-up performance" of the catalyst. The Examples of the disclosure comprise monolith substrates coated continuously from one end to the other with a first washcoat layer and a second (top) washcoat also applied in a layer continuously from one end of the monolith substrate to the other so that the second washcoat layer is wholly supported by the first (bottom) washcoat layer.

US patent publication no. 2010/00290964A1 discloses Pd enriched diesel oxidation catalysts and their application as catalysts for the oxidation of CO and HC emissions from a compression ignition/diesel engine, including for exotherm generation. The catalysts comprise a substrate; an undercoat layer comprising a refractory oxide support, optionally a zeolite, optionally an oxygen storage material, and a primary catalytic metal selected from the group consisting of platinum, palladium, iridium, rhodium, ruthenium, alloys thereof, and mixtures thereof; and an overcoat layer comprising a refractory oxide support, optionally a zeolite, optionally an oxygen storage material and a primary catalytic metal selected from the group consisting of platinum, palladium, iridium, rhodium, ruthenium, alloys thereof, and mixtures thereof, wherein the Pd to Pt ratio of the overcoat layer is greater than the Pd to Pt ratio of the undercoat. The catalysts are said to be characterised by increased performance and hydrothermal durability, these goals being achieved by employing a layered design to eliminate low temperature catalyst quenching (exotherm extinction) by toxic HC species in the exhaust stream. Some of the Examples feature a 50% substrate axial length overcoat layer coated on a 100% substrate axial length undercoat layer.

WO2010/118125A1 discloses an oxidation catalyst composite for treating exhaust gas emissions from a diesel engine including at least two washcoat layers, a first washcoat comprising a palladium component and a second washcoat containing platinum and at least about 50% of the total platinum is located in the rear of the catalyst. The Examples include composites of a 50% axial length inlet zone having a 3.88 g/L (110 g/ft³) platinum-only washcoat and 15.26 g/L (0.25 g/in³) H-beta zeolite; or a 50% axial length inlet zone comprising a washcoat of 5.30 g/L (150 g/ft³) 1:2 weight ratio of platinum to palladium and 15.26 g/L (0.25 g/in³) H-beta zeolite. However, WO2010/118125A1 does not mention that the catalysts disclosed can be used for generating an exotherm or heat from additional hydrocarbons introduced into the exhaust gas and none of the Examples provided illustrate this use.

WO2014/151677A1 discloses a zoned diesel oxidation catalyst composite comprising a first washcoat zone with a Pt/Pd ratio that is less than 3:1 and a PGM loading at least twice that of a second washcoat zone, which can be used for creating an exotherm to regenerate a downstream particulate filter. There is no specific disclosure or Example including any zeolite in either washcoat zone.

US patent publication no. 2008/045405A1 discloses a diesel oxidation catalyst for a light-duty diesel engine comprising two distinct washcoat layers containing two distinctly different ratios of Pt:Pd and does not mention using the catalyst for exotherm generation or heating downstream exhaust system components. The catalyst composites in the Examples comprise top and bottom layers. One such Example comprises a top washcoat layer comprising a platinum to palladium weight ratio of 3:1 at a total loading of 1.95 g/L (55.1 g/ft³) and 24.4 g/L (0.4 g/in³) zeolite H-Beta; and a bottom layer comprising platinum and palladium at a weight ratio of 1.4:1 at 1.98 g/L (56 g/ft³). According to the description, the top and bottom layers can be rearranged as zones with the top layer on the upstream end of a substrate and the bottom layer on the downstream end thereof.

It is known, e.g. from Applicant's WO2006/056811A1, WO2020/260669A1 and WO2021/074605A1 that an equivalent weight or a palladium-rich, relatively low weight ratio, of platinum to palladium is more active for generating an exotherm from the combustion of a hydrocarbon for heating a downstream filter substrate than a platinum-rich combination thereof.

Documents EP 4201517 A1 and US 2009/288402 A1 disclose layered diesel oxidation catalysts.

At the priority date of this application the "spot price" of palladium is US$1020 per ounce and for platinum is US$945 per ounce.

In view of the higher price of palladium relative to platinum, there is a general market need to provide less costly heavy-duty diesel oxidation catalysts, i.e. catalysts including higher total weight ratios of platinum-to-palladium, whose activity for generating and maintaining exotherms by combusting hydrocarbons is as close as possible to oxidation catalysts having Pd-rich weight ratios of platinum-to-palladium. There is also a general market need to reduce the total quantity of expensive platinum group metals in such oxidation catalysts and still meet desired capability to generate an exotherm. To these aims, Applicant's inventors have conducted research and have discovered that, very surprisingly, at lower total platinum group metals and relatively high platinum-to-palladium weight ratios, large pore aluminosilicate zeolites including a ring size of twelve tetrahedral atoms are able to contribute beneficially to exotherm generation activity, particularly in heavy-duty diesel exhaust gases. This technical effect is not observed in similar Pd-rich oxidation catalysts. Furthermore, this technical effect is different from the known effect of passively adsorbing (or trapping) hydrocarbons in a zeolite component of a light-duty diesel oxidation catalyst at relatively low exhaust gas temperatures and releasing the adsorbed hydrocarbon at higher exhaust gas temperatures (see Example 1 hereinbelow).

### SUMMARY OF THE INVENTION

In this regard, in a first aspect, the invention provides a diesel oxidation catalyst for use in an exhaust system of a heavy-duty diesel engine for: oxidising carbon monoxide (CO) and hydrocarbons (HC) to carbon dioxide (CO₂) and water (H₂O), including the generation of an exotherm from HC for heating a filter substrate in the exhaust system disposed downstream from the oxidation catalyst; and oxidising nitrogen monoxide (NO) to nitrogen dioxide (NO₂) in exhaust gas emitted from the heavy-duty diesel engine, which diesel oxidation catalyst comprising:
(i) a monolith substrate, preferably a flow-through substrate, having a first substrate end and a second substrate end and an axial length extending therebetween;
(ii) a first washcoat layer supported at least in part directly by a surface of the monolith substrate and extending from the first substrate end to less than the axial length of the monolith substrate, which first washcoat layer comprising a large pore aluminosilicate zeolite including a ring size of twelve tetrahedral atoms;
(iii) a first washcoat zone extending from the first substrate end to less than the axial length of the monolith substrate and comprising both platinum and palladium and a particulate refractory metal oxide support material, wherein a platinum to palladium weight ratio in the first washcoat zone is 10:1 to 2:1 at a total platinum group metal loading of 0.353 to 1.41 g/L (10 to 40 g/ft³); and
(iv) a second washcoat layer supported at least in part directly by a surface of the monolith substrate and extending from the second substrate end to less than the axial length of the monolith substrate, which second washcoat layer comprising a weight ratio of platinum to palladium of 1:0 to 2:1 and a particulate refractory metal oxide material for supporting the platinum or both the platinum and palladium, wherein the second washcoat layer axially abuts with the first washcoat layer, the first washcoat layer overlaps the second washcoat layer or the second washcoat layer overlaps the first washcoat layer,
wherein an axial length of the first washcoat zone is less than an axial length of the second washcoat layer; a total platinum group metal loading in g/ft³ in the first washcoat zone is at least twice the total platinum group metal loading in the second washcoat layer; a total platinum group metal loading on the monolith substrate as a whole is from 0.247 to 0.706 g/L (7 to 20 g/ft³); and the zeolite loading in the first washcoat layer is 6.10 to 91.54 g/L (0.1 to 1.5 g/in³).

The technical effect identified by Applicant's inventors has not been recognised in the prior art, where zeolites are included for their known hydrocarbon trapping function; and/or zeolites are combined with relatively high g/L (g/ft³) platinum group metal loadings and/or relatively Pd-rich Pt:Pd weight ratios.

According to a second aspect, the invention provides an exhaust system of a heavy-duty diesel engine comprising a diesel oxidation catalyst according to the first aspect of the invention and a filter substrate disposed downstream from the diesel oxidation catalyst, wherein the first substrate end of the diesel oxidation catalyst is oriented to the upstream side.

A third aspect of the invention provides a heavy-duty diesel engine comprising an exhaust system according to the second aspect of the invention.

According to a fourth aspect, the invention provides the use of a diesel oxidation catalyst comprising: (i) a monolith substrate, preferably a flow-through substrate, having a first substrate end and a second substrate end and an axial length extending therebetween; (ii) a first washcoat layer supported at least in part directly by a surface of the monolith substrate and extending from the first substrate end to less than the axial length of the monolith substrate, which first washcoat layer comprising a large pore aluminosilicate zeolite including a ring size of twelve tetrahedral atoms; (iii) a first washcoat zone extending from the first substrate end to less than the axial length of the monolith substrate and comprising both platinum and palladium and a particulate refractory metal oxide support material, wherein a platinum to palladium weight ratio in the first washcoat zone is 10:1 to 2:1 at a total platinum group metal loading of 0.353 to 1.41 g/L (10 to 40 g/ft³); and (iv) a second washcoat layer supported at least in part directly by a surface of the monolith substrate and extending from the second substrate end to less than the axial length of the monolith substrate, which second washcoat layer comprising a weight ratio of platinum to palladium of 1:0 to 2:1 and a particulate refractory metal oxide material for supporting the platinum or both the platinum and palladium, wherein the second washcoat layer axially abuts with the first washcoat layer, the first washcoat layer overlaps the second washcoat layer or the second washcoat layer overlaps the first washcoat layer, wherein an axial length of the first washcoat zone is less than an axial length of the second washcoat layer; a total platinum group metal loading in g/ft³ in the first washcoat zone is at least twice the total platinum group metal loading in the second washcoat layer; a total platinum group metal loading on the monolith substrate as a whole is from 0.247 to 0.706 g/L (7 to 20 g/ft³); and the zeolite loading in the first washcoat layer is 6.10 to 91.54 g/L (0.1 to 1.5 g/in³), for generating an exotherm from hydrocarbons in an exhaust gas of a heavy-duty diesel engine.

### DESCRIPTION OF THE DRAWINGS

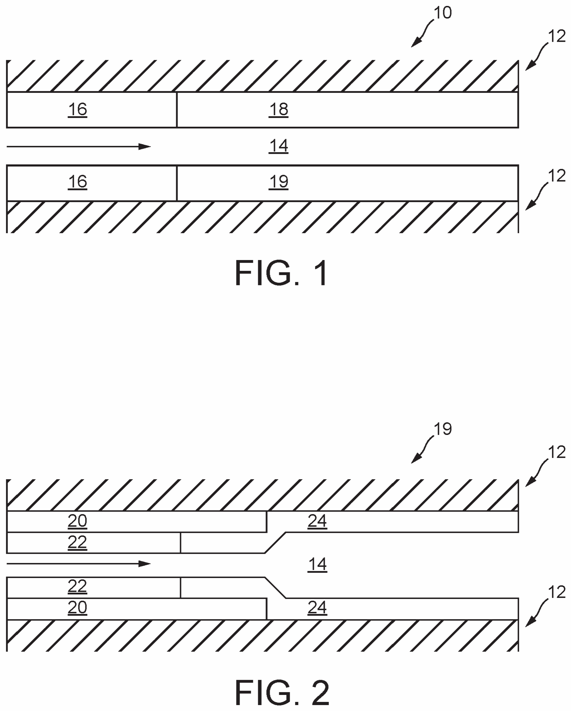

Figure 1 is a schematic of a diesel oxidation catalyst 10 according to a first preferred embodiment of the first aspect of the invention. What is depicted is a cross-section through a single channel of a flow-through monolith substrate, e.g. a cordierite monolith substrate, also known as a "honeycomb" substrate. The number of channels of such substrates in this technical field are typically indicated in cells per square centimetre (cells per square inch (cpsi)). The channel walls 12 of the flow-through monolith substrate is indicated by hashed lines defines a hollow section of the channel 14. The channel wall surfaces of the monolith substrate support directly a first washcoat layer 16, which in this embodiment consists of the first washcoat zone and *vice versa.* The first washcoat layer 16 is coated over 25% of the axial length of the monolith substrate. The first washcoat layer comprises, barium, 42.7 g/ l (0.7 g/in³) of a beta or zeolite Y aluminosilicate zeolite, an alumina particulate refractory metal oxide support material, and platinum and palladium in a weight ratio of 4:1 at a total platinum group metal loading of 0.883 g/L (25 g/ft³). The first washcoat layer 16 is oriented to the upstream side, indicated by the direction-of-flow arrow. A second washcoat layer 18, comprising an alumina particulate refractory metal oxide support material, barium and platinum and palladium in a weight ratio of 6:1 at a total platinum group metal loading of 0.141 g/L (4 g/ft³) is disposed downstream from the first washcoat zone/layer 16 and is coated over 75% of the axial length of the monolith substrate starting from the outlet end thereof. The axial lengths of the first washcoat zone/layer and the second washcoat layer are selected to abut one another, but in the process of manufacture a relatively small amount of overlap of one of the first washcoat layer and the second washcoat layer on the other can be tolerated, so long as there is no axial gap between the axial lengths of the two layers: axially, the two layers should at least be touching; and

Figure 2 is also a schematic of a diesel oxidation catalyst 19 according to a second preferred embodiment of the first aspect of the invention. A cross-section through a single channel of a flow-through monolith substrate is shown. The features of Figure 2 common to Figure 1 share the same reference numerals. In Figure 2, a first washcoat layer 20 comprising a beta or zeolite Y aluminosilicate zeolite loading of 61.0 g/L (1.0 g/in³) is coated over 50% of the axial length of the monolith substrate from the inlet end thereof. A first washcoat zone 22, which in this embodiment consists of a third washcoat layer 22 (and *vice versa*), is coated on top of the first washcoat layer to an axial length of 40% of the monolith substrate from its inlet end. The third washcoat layer 22 comprises barium, a 5wt% silica-doped alumina particulate refractory metal oxide support material and platinum and palladium in a weight ratio of 5:1 at a total platinum group metal loading of 1.413 g/L (40 g/ft³). The second washcoat layer 24 is applied from the downstream end of the substrate to an axial length of 60% of the substrate. That is, the third washcoat 24 is intended to axially abut with the third washcoat layer 22 and overlaps an axial length of 10% of the underlying first washcoat layer, with some allowable processing overlap between the third and second washcoat layers (20, 22), i.e. the second and third washcoat layers at least abut, so there is no "gap" therebetween. The second washcoat layer 22 comprises 5wt% silica-doped alumina particulate refractory metal oxide support material and platinum and palladium in a weight ratio of 6:1 at a total platinum group metal loading of 0.353 g/L (10 g/ft³) (no barium).

### DETAILED DESCRIPTION OF THE INVENTION

The monolith substrate for use in the present invention can be a flow-through, or so-called "honeycomb, substrate, i.e. a metal or ceramic substrate having axially extending channels open at both ends thereof, or a wall-flow filter, but is preferably a flow-through substrate.

According to the first aspect of the invention, the platinum to palladium weight ratio in the first washcoat zone is preferably 7:1 to 2.5:1. The preference for this range is shown in Example 3 hereinbelow comparing Samples according to the invention with Comparative Sample 13.

The particulate refractory metal oxide support material in the first washcoat zone, first, second or third washcoat layer can each be independently selected from the group consisting of alumina, magnesia, silica, zirconia, titania and composite oxides or mixed oxides of any two or more thereof. That is, the support material of each of the first zone, first, second and third washcoat layers can be the same as each other or different from each other. In principle any suitable particulate refractory metal oxide support material may be used as the particulate refractory metal oxide support material. However, the inclusion of a dopant may stabilise the particulate refractory metal oxide support material or promote catalytic reaction of the supported platinum group metal. Typically, the dopant may be selected from the group consisting of zirconium (Zr), titanium (Ti), silicon (Si), yttrium (Y), lanthanum (La), praseodymium (Pr), samarium (Sm), neodymium (Nd), barium (Ba) and an oxide thereof. In general, the dopant is different to the refractory metal oxide (i.e. the cation of the refractory metal oxide). Thus, for example, when the refractory metal oxide is titania, then the dopant is not titanium or an oxide thereof.

When the refractory metal oxide support material is doped with a dopant, then typically the refractory metal oxide support material comprises a total amount of dopant of 0.1 to 10 % by weight. It is preferred that the total amount of dopant is 0.25 to 7 % by weight, more preferably 2.5 to 6.0 % by weight. Preferably the dopant of alumina is silica, because oxidation catalysts comprising such support materials in combination with platinum group metals and alkaline earth metals (barium or strontium) promote oxidation reactions, such as CO and hydrocarbon oxidation.

The total platinum group metal loading in the first washcoat zone is preferably 0.353 to 1.06 g/L (10 to 30 g/ft³). A basis for this preference can be seen from the trend shown in the results in Example 3, Table 3 for Sample 7 and Comparative Sample 6; Sample 9 and Comparative Sample 8; and Comparative Samples 10 and 11. Specifically, it can be seen that as the platinum group metal loading in the front zone - corresponding to the combination of the first washcoat layer and first washcoat zone of the first aspect of the invention - increases, the inlet temperature corresponding to an outlet temperature ≤ 500°C; and the inlet temperature corresponding to ≤ 800 ppm hydrocarbon slip for the Samples containing zeolite in the front zone increases relative to the corresponding Comparative Sample without zeolite in the front zone. Without wishing to be bound by theory, Applicant believes that this phenomenon may be being caused by the zeolite "trapping" palladium within the washcoat layer, even in Pt-rich Pt:Pd weight ratios, such as 3:1, rather than allowing the migration of palladium to an exposed surface of the layer during drying of the coating during manufacture. This effect is described in Applicant's WO2014/132034A1. For similar reasons, Applicant prefers that the total platinum group metal loading on the monolith substrate as a whole is from 0.247 to 0.530 g/L (7 to 15 g/ft³).

In this regard, preferably, in diesel oxidation catalysts according to the first aspect of the invention, the first washcoat zone comprises a catalyst layer having an exposed upper surface and a supporting lower surface and a non-uniform distribution of palladium which decreases from the exposed upper surface to the supporting lower surface in a direction perpendicular to a surface of the monolith substrate. The perpendicular gradient of the palladium at the exposed surface and within the layer can be determined by electron probe micro analysis with wavelength dispersive X-ray spectroscopy (EPMA-WDX).

In a first preferred embodiment substantiated by Samples in 1 to 13, 17 and 18 in Examples 2, 3 and 4 hereinbelow and shown schematically in Figure 1, the first washcoat zone consists of the first washcoat layer and the zeolite loading in the first washcoat layer is 6.10 to 61.02 g/L (0.1 to 1.0 g/in³). That is, where the first washcoat layer and the first washcoat zone are one and the same feature. Preferably, the zeolite loading in the first washcoat layer is 18.31 to 48.82 g/L (0.3 to 0.8 g/in³). A reason for this preference can be seen from the comparison of the results for Samples 4 and 5 in Table 3 hereinbelow, where an increase in the zeolite loading from 30.51 to 61.02 g/L (0.5 g/in³ to 1.0 g/in³) does not provide any significant improvement in lowering the temperature of exotherm generation. In Sample 5, zeolite is a more expensive component of the washcoat than the silica-doped alumina support material, so unless there is a functional benefit to including the zeolite, the catalyst as a whole would be cheaper to produce with less zeolite.

In the first preferred embodiment, the first washcoat zone can extend for 15 to 45% of the axial length of the monolith substrate from the first substrate end. A comparison of Samples 7 (33%) and 18 (30%) illustrates that this feature can be varied to still achieve the object of the invention. In this regard, the first washcoat zone preferably extends for 20 to 40% of the axial length of the monolith substrate from the first substrate end.

In a second preferred embodiment of the first aspect of the invention illustrated by Samples 14 to 16 and shown schematically in Figure 2, the first washcoat zone consists of a third washcoat layer disposed in a layer coated directly on top of the first washcoat layer and the zeolite loading in the first washcoat layer is 12.20 to 61.02 g/L (0.2 to 1.0 g/in³), wherein, as coated, the first washcoat layer comprises no platinum group metal. By "as coated" herein, we mean that no platinum group metal is intentionally included in the washcoat slurry that forms the first washcoat layer of this embodiment. However, in the finished product, it cannot be excluded that some platinum group metal may migrate, e.g. by wicking, during processing from the upper third washcoat layer to the lower first washcoat layer. An advantage of there being no platinum group metal in the first washcoat layer is that - at a constant platinum group metal loading - the exotherm generation temperature is desirably better than when platinum group metal is transferred from the third washcoat layer to the first washcoat (under)layer. This can be seen from the results for Sample 16 and Comparative Samples 14 and 15 in Table 6 hereinbelow.

As is shown in Sample 16, the third washcoat layer can extend for 15 to 45%, preferably 20 to 40%, of the axial length of the monolith substrate from the first substrate end.

As is also illustrated by Sample 16 and as shown in Figure 2, the first washcoat layer can extend for at least the axial length of the third washcoat layer. Indeed, as is shown in Figure 2, it is preferred that the first washcoat layer is axially longer than the third washcoat layer and the second washcoat layer overlaps the first washcoat layer. In this regard, the first washcoat layer can extend for 30% to 60% of the axial length of the monolith substrate in combination with the third washcoat layer extending for 15 to 45%, preferably 20 to 40%, of the axial length of the monolith substrate from the first substrate end.

In the first or second preferred embodiments of the first aspect of the invention, the second washcoat layer can extend from 85% to 55% of the axial length of the monolith substrate such that the second washcoat layer axially abuts with the first washcoat layer, the first washcoat layer overlaps the second washcoat layer or the second washcoat layer overlaps the first washcoat layer. As is shown in Sample 16, the second washcoat layer preferably extends from 80% to 60% of the axial length of the monolith substrate.

The large pore aluminosilicate zeolite in the first washcoat layer can have the *BEA, FAU or MOR framework type code, but is preferably *BEA. A preferred FAU zeolite is zeolite Y; and an example of a MOR zeolite is mordenite and a preferred *BEA zeolite is beta. (It will be understood that the "*" in the designation "*BEA" indicates a zeolite with intergrowths (previously designated by the International Zeolite Association as "disordered"). For further information, see the International Zeolite Association website at https://europe.iza-structure.org/IZA-SC/DO_structures/DO_family.php?IFN=Beta.

In the first and second preferred embodiments, a total washcoat loading in the first washcoat zone can be 30.51 to 152.56 g/L (0.5 to 2.5 g/in³). Where the first washcoat zone consists of the first washcoat layer, this total washcoat loading comprises both the zeolite loading and the particulate refractory metal oxide support material. In this regard, the particulate refractory metal oxide support material loading in the first washcoat zone can itself be 30.51 to 152.56 g/L (0.5 to 2.5 g/in³), e.g. where no zeolite is present in the first washcoat zone, such as in the second preferred embodiment. The particulate refractory metal oxide support material loading in the first washcoat zone is preferably 48.82 to 122.05 g/L (0.8 to 2.0 g/in³), see e.g. Sample 2 of the first preferred embodiment; and Sample 16 of the second preferred embodiment. A higher loading of particulate refractory metal oxide support material can ensure sufficient surface area to obtain an as-manufactured, i.e. "fresh", platinum group metal dispersion and reduce platinum group metal sintering on hydrothermal ageing, which ageing mimics ageing *in situ,* i.e. when in use. However, at relatively lower platinum group metal loadings, a higher platinum group metal dispersion can decrease mass transfer of gas to active sites on the elemental platinum group metal particles. The appropriate selection of washcoat particulate refractory metal oxide support material loading and durability to hydrothermal ageing can be determined by routine optimisation.

A particulate refractory metal oxide support material loading in the second washcoat layer can be 48.8 to 122.0 g/L (0.8 to 2.0 g/in³).

Preferably, the first washcoat zone comprises strontium or barium, preferably barium. Relevant loadings of strontium or barium are 1.77 to 6.18 g/L (50 to 175 g/ft³), preferably 2.65 to 4.41 g/L (75 to 125 g/ft³). It is known from Applicant's WO2020/260669A1 that barium and strontium can improve exotherm generation in combination with a Pt-rich combination of platinum and palladium.

Preferably, the second washcoat layer also comprises strontium or barium, preferably barium. Preferred loadings of strontium or barium are 1.77 to 6.18 g/L (50 to 175 g/ft³), preferably 2.65 to 4.41 g/L (75 to 125 g/ft³).

To avoid any accidental anticipation by catalyst technologies designed for treating gasoline (spark ignition) engines, or diesel oxidation catalysts that are not sulphur tolerant, Applicant includes two definitions to exclude such catalysts: (i) the diesel oxidation catalyst according to the invention does not contain rhodium; and (ii) the diesel oxidation catalyst according to the invention does not contain an oxygen storage component (OSC), as defined hereinbelow.

Methods of making diesel oxidation catalysts according to the invention are known in the art and include Applicant's WO 1999/047260A1, i.e. the steps of (a) locating a containment means on top of a monolith substrate, (b) dosing a pre-determined quantity of a liquid component into said containment means (2), either in the order (a) then (b) or (b) then (a), and (c) by applying vacuum, drawing the entirety of said quantity of liquid component into at least a portion of the monolith substrate, and retaining substantially all of said quantity within the monolith substrate, without recycle. See also WO 2007/077462; and - for coating wall flow filter monolith substrates - WO 2011/080525. Similarly, the conditions for drying and calcining a washcoat are also well known.

Methods of obtaining the "the first washcoat zone comprises a catalyst layer having an exposed upper surface and a supporting lower surface and a non-uniform distribution of palladium which decreases from the exposed upper surface to the supporting lower surface in a direction perpendicular to a surface of the monolith substrate" feature are disclosed in WO2014/132034A1, i.e. (a) providing an aqueous slurry comprising a first support material precursor, a first noble metal component and a second noble metal component; (b) applying the aqueous slurry onto a substrate to form a coating; and (c) drying and calcining the coating using conditions that allow at least the first noble metal component to flow toward or away from the substrate", with reference to Example 1 and Comparative Example 2 therein.

In the exhaust system of the second aspect of the invention, the system can comprise an injector for injecting hydrocarbon into exhaust gas flowing in the exhaust system downstream from an engine manifold and upstream from the first substrate end; and a source of hydrocarbon for generating an exotherm by combustion of the hydrocarbon on the oxidation catalyst. Alternatively, a microprocessor component of the engine control unit can be pre-programmed, when in use, variably to control fuel injection timing, such as to produce multiple injections during one engine cycle. As the name suggests, multiple injections replace a single injection event with multiple discrete injection events. Injection events that occur after the main injection, often referred to as post-injections or after-injections, can allow additional unburned hydrocarbons to be emitted from the engine cylinder for exotherm generation on a diesel oxidation catalyst.

### DEFINITIONS

"Oxygen storage component" (OSC) herein is intended to mean a particulate material that has multi-valence states and can actively react with oxidants such as oxygen or nitrous oxides under oxidative conditions, or with reductants such as carbon monoxide (CO) or hydrogen under reductive conditions. Typically, an oxygen storage component will comprise one or more reducible oxides of one or more rare earth metals. Examples of suitable oxygen storage components include ceria as such, zirconia as such and combinations, such as mixed oxides or composite oxides of ceria and zirconia. Praseodymia can also be included as an OSC or a promoter. The OSC may include one or more promoters or modifiers, such as Y, La, Nd, Sm, Pr, and combinations thereof.

### Heavy-duty diesel engines

For the avoidance of doubt, heavy-duty diesel engines according to the third aspect of the invention can use any of the definitions set out in the "Background to the Invention" section hereinabove. So, for example, where a patent application is for Japan, the heavy-duty diesel vehicle limitations required for emission standards in Japan can be incorporated into a claim definition to an engine or vehicle. Similarly, for European or US etc. legislation. For the further avoidance of doubt, heavy-duty diesel engines for use in the present invention are not managed to operate a lean/rich cycle suitable for normal operation or desulfation of a Lean NOx trap (LNT) catalyst, i.e. a catalyst including relatively high quantities of ceria, alkaline earth and/or alkali metal carbonates or oxides for adsorbing NOx thereon during lean running conditions. In preferred arrangements, the exhaust system according to the invention does not include a LNT.

The heavy-duty diesel engine according to the third aspect of the invention can be a homogeneous charge compression ignition (HCCI) engine, a pre-mixed charge compression ignition (PCCI) engine or a low temperature combustion (LTC) engine. It is preferred that the diesel engine is a conventional (i.e. traditional) diesel engine, e.g. using common rail fuel injection.

The term "light-duty diesel vehicle (LDV)" is defined in US or European legislation. In the US, a light-duty diesel vehicle (LDV) refers to a diesel vehicle having a gross weight of ≤3855.5 kg (≤ 8,500 pounds (US lbs)).

In Europe, a light-duty diesel vehicle is defined as a vehicle in the categories M₁, M₂, N₁ and N₂ with a reference mass of ≤2610 kg (EU5/6).

In USA, a heavy-duty diesel vehicle (HDV) as defined in legislation, is a diesel vehicle having a gross vehicle weight rating of > 3855.5 kg (> 8,500 pounds (US lbs)) in the Federal jurisdiction and above 6350.3 kg (14,000 pounds) in California (model year 1995 and later).

In Europe, a heavy-duty diesel vehicle is a vehicle designed and constructed for the carriage of goods and having a maximum mass (i.e. "maximum technically permissible laden mass") of more than 3.5 tonnes (i.e. metric tons) but either not exceeding 12 tonnes (N₂ category) or exceeding 12 tonnes (N₃ category), i.e. trucks; or a vehicle designed and constructed for the carriage of passengers comprising more than 8 seats in addition to the driver's seat and having a maximum mass either not exceeding 5 tonnes (M₂ category); or exceeding 5 tonnes (M₃ category), i.e. buses and coaches, according to EU legislation (Council Directive 2007/46/EC). China broadly follows the European definition.

In Japan, an HDV is a heavy commercial vehicle defined as having a gross vehicle weight >7500 kg.

In South Korea, the emission standards for heavy-duty vehicles are based on the European standards and so the above definitions for Europe apply.

In Brazil, an HDV is a motor vehicle for the transportation of passengers and/or goods, with a maximum gross vehicle weight higher than 3,856 kg or a vehicle curb weight higher than 2,720 kg.

In India, an HDV is a vehicle of gross vehicle weight >3,500 kg.

In order that the invention may be more fully understood, the following Examples are provided by way of illustration only. The Samples disclosed in the Examples were prepared according to the method disclosed in Applicant's WO 1999/047260A1.

### EXAMPLES

### Example 1 - Evidence of zeolite oxidation activity in the absence of platinum group metal

Beta zeolite was added to an aqueous slurry of milled gamma-alumina to give a composition ratio of 10% zeolite and 90% alumina. No platinum group metal (PGM) salts were added to the slurry. The washcoat was mixed and then coated onto a 1.6 litre volume ceramic flow through substrate, dried and then calcined. The final catalyst-coated substrate was hydrothermally aged in air in an oven at 750°C for 10 hours.

Catalyst activity was assessed by fitting the aged catalyst to a 2.4 litre diesel engine. Low sulphur diesel fuel was used and the engine was operated to run a simulated MVEG-B cycle (New European Drive Cycle (NEDC)) - see explanation of emission test cycle "ECE 15 + EUDC/NEDC" on DieselNet.com and available at https://dieselnet.com/standards/cycles/ece_eudc.php. Emissions were measured at the sample substrate inlet outlet positions. Three consecutive cycles were run with each cycle starting from a cold condition (<30°C), with the temperature inside the catalyst sample substrate reaching >315°C during the hottest part of the test. This temperature is considered hot enough to release hydrocarbon species adsorbed/stored in a beta zeolite framework and can be demonstrated by simple adsorption and release tests using decane and thermogravimetric analytical equipment.

Engine-out cumulative HC emissions (pre-catalyst sample substrate) over the simulated MVEG-B cycle were 2.0 g.

Table 1 below shows the percentage reduction in cumulative hydrocarbon emissions after the exhaust has passed through the catalyst sample substrate.

**Table 1**

| | **Cycle 1** | **Cycle 2** | **Cycle 3** |
|---|---|---|---|
| **% HC reduction** | 28 | 26 | 23 |

As the temperature over the simulated MVEG-B cycle goes above 300°C the difference in hydrocarbon emissions between the pre- and post-catalyst positions is not attributed to hydrocarbon storage. Adsorbed/stored hydrocarbons would be released from the beta zeolite over a simulated MVEG-B cycle. Therefore, Applicant's inventors attribute the reduction in cumulative hydrocarbon emissions to hydrocarbon conversion (including oxidation) rather than adsorption/storage.

### Example 2 - Sample preparation

A cylindrical cordierite flow-through honeycomb monolith substrate (i.e. having channels open at both ends) of 400 cells per square inch and having dimensions of length 4 inches x a diameter of 10.5 inches was coated with a first catalyst washcoat slurry containing aqueous salts (as nitrates) of platinum and palladium, barium acetate and a 5wt% silica-doped alumina particulate support to 33% of the axial length of the substrate from the inlet end. The resulting substrate coated with the first catalyst washcoat slurry was then dried in a conventional oven for 1 hour at 100°C to remove excess water and other volatile species. A second catalyst washcoat slurry was prepared comprising aqueous salts (as nitrates) of platinum and palladium, barium acetate and a 5wt% silica-doped alumina particulate support to 67% of the axial length of the substrate from the outlet end. The resulting substrate coated with the second catalyst washcoat slurry was then dried in a conventional oven for 1 hour at 100°C to remove excess water and other volatile species and then the dried part was calcined for 1 hour at 500°C to decompose the platinum and palladium salts and fix the platinum and palladium to the silica-doped alumina support.

The concentrations of platinum salts and palladium salts used in the first and second catalyst washcoat slurries was selected so that the calcined product had a first catalyst washcoat layer and a second catalyst washcoat layer having the Pt:Pd weight ratios set out in Table 1 hereinbelow and also a total substrate platinum group metal loading (g/L (g/ft³)) as indicated in Table 1. The quantity of the 5wt% silica-doped alumina particulate support in the first catalyst washcoat slurry was selected so that the calcined product had a loading of the 5wt% silica-doped alumina particulate support of 85.4 g/L (1.4 g/in³). The loading of the 5wt% silica-doped alumina particulate support in the second catalyst washcoat layer was identical to that of the first catalyst washcoat layer. Beta zeolite was added to the first catalyst washcoat slurry at 30.5 to 61.0 g/L (0.5 or 1.0 g/in³), in addition to the loading of the 5wt% silica-doped alumina particulate support. An identical barium acetate loading was used in the first catalyst washcoat layer and the second catalyst washcoat layer in all of the samples set out in Table 1. A schematic diagram of the construction of the samples in Table 1 is shown in Figure 1.

All samples in Table 2 were oven-aged in air at 650°C for 50 hours.

In Table 2 the first catalyst washcoat layer is referred to as a "Front Zone" or "FZ" and the second catalyst washcoat layer is referred to as a "Rear Zone" or "RZ".

**Table 2**

| **Sample No.** | **FZ Pt:Pd weight ratio** | **FZ PGM loading (g/L (g/ft³))** | **FZ Beta zeolite loading (g/L (g/in³))** | **RZ Pt:Pd weight ratio** | **RZ PGM loading (g/L (g/ft³))** | **Total PGM loading (g/L (g/ft³))** |
|---|---|---|---|---|---|---|
| 1 (Comparative) | 6:1 | 0.706 (20) | 0 | 6:1 | 0.177 (5) | 0.353 (10) |
| 2 | 6:1 | 0.706 (20) | 30.5 (0.5) | 6:1 | 0.177 (5) | 0.353 (10) |
| 3 (Comparative) | 6:1 | 1.41 (40) | 0 | 6:1 | 0.353 (10) | 0.706 (20) |
| 4 | 6:1 | 1.41 (40) | 30.5 (0.5) | 6:1 | 0.353 (10) | 0.706 (20) |
| 5 | 6:1 | 1.41 (40) | 61.0 (1.0) | 6:1 | 0.353 (10) | 0.706 (20) |
| 6 (Comparative) | 3:1 | 0.706 (20) | 0 | 6:1 | 0.177 (5) | 0.353 (10) |
| 7 | 3:1 | 0.706 (20) | 30.5 (0.5) | 6:1 | 0.177 (5) | 0.353 (10) |
| 8 (Comparative) | 3:1 | 1.41 (40) | 0 | 6:1 | 0.353 (10) | 0.706 (20) |
| 9 | 3:1 | 1.41 (40) | 30.5 (0.5) | 6:1 | 0.353 (10) | 0.706 (20) |
| 10 (Comparative) | 3:1 | 1.77 (50) | 30.5 (0.5) | 6:1 | 0.441 (12.5) | 0.883 (25) |
| 11 (Comparative) | 3:1 | 1.77 (50) | 0 | 6:1 | 0.441 (12.5) | 0.883 (25) |
| 12 (Comparative) | 1:2 | 0.706 (20) | 0 | 6:1 | 0.177 (5) | 0.353 (10) |
| 13 (Comparative) | 1:2 | 0.706 (20) | 30.5 (0.5) | 6:1 | 0.177 (5) | 0.353 (10) |

### Example 3 - "Continuous exotherm" test

A "continuous exotherm" test on the aged Samples and Comparative Samples in Table 2 was performed using a laboratory bench-mounted diesel engine. The engine was fuelled with EUVI B7 fuel (7% Bio fuel) for both engine operation and exhaust gas hydrocarbon enrichment (exotherm generation), running at 2200 rpm and was fitted with an exhaust system including exhaust piping and demountable canning into which each of the catalyst samples could be inserted for testing with the inlet end oriented to the upstream side. The engine was a 7-litre capacity EUV 6-cylinder engine, producing 235 kW at 2500 rpm and the exhaust system included a "7^{th} injector" disposed to inject hydrocarbon fuel directly into the exhaust gas piping downstream from the engine manifold and upstream from the catalyst sample to be tested. This injector is named the "7^{th} injector" because it is additional to the six fuel injectors associated with the cylinders of the engine. For each sample tested, thermocouples were located at the substrate sample inlet and at the substrate sample outlet. Additionally, a hydrocarbon sensor was located at the substrate sample outlet.

Each sample substrate was conditioned at an inlet temperature of 490°C for 20 minutes, followed by a fast cool-down to an inlet temperature of about 320°C. The catalyst was held at about 320°C and about 400 kg/h flow rate into the sample substrate for 10 minutes. Hydrocarbon injection via the 7^{th} injector was then begun at a rate to achieve an exotherm generating 600°C at the sample substrate outlet. This exotherm was maintained at steady state for 5 minutes. A hydrocarbon oxidation catalyst light-out temperature ramp-down was then begun by continuously adjusting the engine load to achieve a 1°C temperature drop per minute at the sample substrate inlet and at a flow rate of 400 kg/h. The exhaust gas temperature at the sample substrate inlet was recorded when the exhaust gas temperature at the sample substrate outlet was 500°C and below. This temperature is also referred to as the "quench" temperature, i.e. the inlet exhaust gas temperature at and below which exotherm generation is considered to be "quenching". As a means of providing greater resolution of the "quench" temperature, data for the inlet temperature recorded when 800 ppm hydrocarbons or more was detected at the sample substrate outlet is shown in Table 3. This information is further useful evidence of catalyst activity in that the more hydrocarbon that slips the catalyst, the less active the catalyst is to combust that slipped hydrocarbon. Therefore, hydrocarbon slip is a measure of the advance towards exotherm extinguishment for the tested sample. The results are shown in Table 3 below.

**Table 3**

| **Sample No.** | **FZ Pt:Pd weight ratio** | **FZ PGM loading (g/L (g/ft³))** | **FZ Beta zeolite loading (g/L (g/in³))** | **Total PGM loading (g/L (g/ft³))** | **Inlet Temp corresponding to outlet Temp ≤ 500°C** | **Inlet Temp at ≤ 800 ppm HC slip** |
|---|---|---|---|---|---|---|
| 1 (Comparative) | 6:1 | 0.706 (20) | 0 | 0.353 (10) | 317.7 | 298.3 |
| 2 | 6:1 | 0.706 (20) | 30.5 (0.5) | 0.353 (10) | 318.0† | 283.0 |
| 3 (Comparative) | 6:1 | 1.41 (40) | 0 | 0.706 (20) | 248.5 | 256.8 |
| 4 | 6:1 | 1.41 (40) | 30.5 (0.5) | 0.706 (20) | 243.2 | 247.0 |
| 5 | 6:1 | 1.41 (40) | 61.0 (1.0) | 0.706 (20) | 244.4* | 248.0* |
| 6 (Comparative) | 3:1 | 0.706 (20) | 0 | 0.353 (10) | 316.2 | 283.4 |
| 7 | 3:1 | 0.706 (20) | 30.5 (0.5) | 0.353 (10) | 317.1† | 281.5 |
| 8 (Comparative) | 3:1 | 1.41 (40) | 0 | 0.706 (20) | 244.1 | 248.4 |
| 9 | 3:1 | 1.41 (40) | 30.5 (0.5) | 0.706 (20) | 243.4† | 246.1 |
| 10 (Comparative) | 3:1 | 1.77 (50) | 0 | 0.883 (25) | 230.7*² | 239.7*² |
| 11 (Comparative) | 3:1 | 1.77 (50) | 30.5 (0.5) | 0.883 (25) | 247.9*² | 257.9*² |
| 12 (Comparative) | 1:2 | 0.706 (20) | 0 | 0.353 (10) | 254.5*³ | 262.5 |
| 13 (Comparative) | 1:2 | 0.706 (20) | 30.5 (0.5) | 0.353 (10) | 264.9 | 268.2 |

| | | | | | | |
|---|---|---|---|---|---|---|
| † It can be seen that, in comparison with Comparative Samples 1, 6 and 8, that the inlet temperature where the recorded outlet temperature was ≤500°C is generally equivalent - within experimental error - to the corresponding Samples 2, 7 and 9 (according to the invention), wherein the front zone comprises zeolite. However, in these comparisons, the corresponding inlet temperature at a detected outlet ≤ 800 ppm hydrocarbon slip is able to better resolve the improvement demonstrated by Samples 2, 7 and 9 according to the invention, substantiating that Samples 2, 7 and 9 are better exotherm-generating catalysts than the corresponding Comparative Sample. *¹ According to the data provided for this specific comparison, no additional benefit is seen where the zeolite loading in the front zone is increased from 30.5 g/L (0.5 g/in³) to 61.0 g/L (1.0 g/in³) (compare results for Samples 4 and 5). *² This catalyst is considered too expensive to be market price competitive because of the high quantity of total platinum group metals, relative to Comparative Sample 8 and is contrary to the technical aim of the invention. Additionally, at these higher total PGM loadings, the benefit of improved exotherm generated by the addition of zeolite in the front zone seen in lower total PGM loadings has been reversed (compare Comparative Samples 10 and 11). *³ It will be noted that the inlet temperatures corresponding to the outlet temperature ≤ 500°C for Comparative Samples 12 and 13 are lower than for the equivalent catalysts according to the invention. However, Comparative Samples 12 and 13 contain more palladium in the front zone, which is more expensive than platinum; and the presence of beta zeolite in the palladium-rich front zone is actually detrimental to exotherm generation. This can be seen from the higher inlet temperature for Comparative Sample 13 compared with Comparative Sample 12. This effect is believed to result from the zeolite "trapping" palladium and reducing access (mass transfer) of exhaust gas to active catalyst sites on the palladium. | | | | | | |

### Example 4 - Two-layer inlet sample preparation and comparisons

In a first two-layer sample, referred to herein as Sample 16 (according to the invention), a cylindrical cordierite flow-through honeycomb monolith substrate (i.e. having channels open at both ends) of 62 cells per square centimetre (400 cells per square inch) and having dimensions of length 10.2 cm (4 inches) x a diameter of 26.7 cm (10.5 inches) was coated with a first washcoat slurry containing beta zeolite to 50% of the axial length of the substrate from the inlet end (no platinum group metal salt). The resulting substrate coated with the first washcoat slurry was then dried in a conventional oven for 1 hour at 100°C to remove excess water and other volatile species and then the dried part was calcined for 1 hour at 500°C. The resulting dried first washcoat slurry is referred to in this Sample 4 as a "first washcoat layer".

A second washcoat slurry was prepared comprising aqueous salts (as nitrates) of platinum and palladium, barium acetate and a 5wt% silica-doped alumina particulate support to 30% of the axial length of the substrate from the inlet end, i.e. the whole of the second washcoat slurry was supported by the first washcoat layer. The resulting substrate coated with the second washcoat slurry was then dried in a conventional oven for 1 hour at 100°C to remove excess water and other volatile species.

A third washcoat slurry was prepared comprising aqueous salts (as nitrates) of platinum and palladium, barium acetate and a 5wt% silica-doped alumina particulate support to 70% of the axial length of the substrate from the outlet end, i.e. also partially overlying the first washcoat layer. The resulting substrate coated with all three washcoats was then dried in a conventional oven for 1 hour at 100°C to remove excess water and other volatile species. The dried part comprising all three washcoat layers was calcined for 1 hour at 500°C to decompose the platinum and palladium salts and fix the platinum and palladium to the silica-doped alumina support. A schematic diagram of the construction of Sample 16 is shown in Figure 2.

Comparative Samples 14 and 15 were prepared identically to Sample 16, except in that, in Comparative Sample 14, the first washcoat slurry contained platinum nitrate (no palladium) to a loading in the first washcoat layer of 0.177 g/L (5 g/ft³), in addition to the beta zeolite; and, in Comparative Sample 15, the first washcoat slurry contained palladium nitrate (no platinum) to a loading in the first washcoat layer of 0.177 g/L (5 g/ft³), in addition to the beta zeolite. In order to maintain the total PGM loading on the monolith substrate relative to Sample 16, the total platinum group loading in the second washcoat layer overlying the first washcoat layer was reduced by 0.177 g/L (5 g/ft³) but the 6:1 Pt:Pd weight ratio in the second washcoat layer was maintained (see Table 4 hereinbelow).

An identical barium acetate loading was used in the second washcoat layer and the third washcoat layer in all of the two-layer samples set out in Table 4 below.

The concentrations of platinum salts and palladium salts used in the second and third washcoat slurries was selected so that the calcined product had a second washcoat layer and a third washcoat layer having the Pt:Pd weight ratios set out in Table 4 hereinbelow. The quantity of the 5wt% silica-doped alumina particulate support in the second washcoat slurry and the third washcoat slurry was selected so that the calcined product had a loading of the 5wt% silica-doped alumina particulate support of 85.4 g/L (1.4 g/in³) in both the second and third washcoat layers of the calcined product.

For comparison, two single-layer samples were prepared similarly to Sample 2, except in that the axial length of the inlet (front zone) was 30%; and the axial length of the outlet (rear zone) was 70% and the concentrations of platinum salts and palladium salts used in the first and second catalyst washcoat slurries was selected so that the calcined product had a first catalyst washcoat layer and a second catalyst washcoat layer having the Pt:Pd weight ratios set out in Table 5 hereinbelow. Sample 17 (no zeolite) is a Comparative Sample; Sample 18, according to the invention, is a reference sample.

In Table 5 the first catalyst washcoat layer is referred to as a "Front Zone" or "FZ" and the second catalyst washcoat layer is referred to as a "Rear Zone" or "RZ".

The total PGM loading on the monolith substrate as a whole in all samples in Tables 3 and 4 below was 0.353 g/L (10 g/ft³).

All samples in Tables 4 and 5 were oven-aged in air at 650°C for 50 hours.

**Table 4**

| **Sample No.** | **Inlet second washcoat layer Pt:Pd weight ratio** | **Inlet second washcoat layer PGM loading (g/L (g/ft³))** | **Inlet first washcoat Beta zeolite loading (g/L (g/in³))** | **Inlet first washcoat PGM loading (g/L (g/in³))/ Pt:Pd weight ratio** | **RZ Pt:Pd weight ratio** | **RZ PGM loading (g/L (g/ft³))** |
|---|---|---|---|---|---|---|
| 14 (Comparative) | 6:1 | 0.706 (20) | 30.5 (0.5) | 0.177 (5) (1:0) | 6:1 | 0.126 (3.57) |
| 15 (Comparative) | 6:1 | 0.706 (20) | 30.5 (0.5) | 0.177 (5) (0:1) | 6:1 | 0.126 (3.57) |
| 16 | 6:1 | 0.883 (25) | 30.5 (0.5) | N/A | 6:1 | 0.126 (3.57) |

**Table 5**

| **Sample No.** | **FZ Pt:Pd weight ratio** | **FZ PGM loading (g/L (g/ft³))** | **FZ Beta zeolite loading (g/L (g/in³))** | **RZ Pt:Pd weight ratio** | **RZ PGM loading (g/L (g/ft³))** | **Total PGM loading (g/L (g/ft³))** |
|---|---|---|---|---|---|---|
| 17 (Comparative) | 6:1 | 0.883 (25) | 0 | 6:1 | 0.126 (3.57) | 0.353 (10) |
| 18 | 6:1 | 0.883 (25) | 30.5 (0.5) | 6:1 | 0.126 (3.57) | 0.353 (10) |

The aged samples in Tables 4 and 5 were tested according to Example 3. The results are set out in Tables 6 and 7 respectively.

**Table 6**

| **Sample No.** | **Inlet second washcoat layer PGM loading (g/L (g/ft³))** | **Inlet first washcoat Beta zeolite loading (g/L (g/in³))** | **Inlet first washcoat PGM loading (g/L (g/in³))/ Pt:Pd weight ratio** | **Inlet Temp corresponding to outlet Temp ≤ 500°C** | **Inlet Temp at ≤ 800 ppm HC slip** |
|---|---|---|---|---|---|
| 14 (Comparative) | 0.706 (20) | 30.5 (0.5) | 0.177 (5) (1:0) | 292.1 | 301.2 |
| 15 (Comparative) | 0.706 (20) | 30.5 (0.5) | 0.177 (5) (0:1) | 281.2 | 289.2 |
| 16 | 0.883 (25) | 30.5 (0.5) | N/A | 270.8 | 279.7 |

**Table 7**

| **Sample No.** | **FZ Pt:Pd weight ratio** | **FZ PGM loading (g/L (g/ft³))** | **FZ Beta zeolite loading (g/L (g/in³))** | **Total PGM loading (g/L (g/ft³))** | **Inlet Temp corresponding to outlet Temp ≤ 500°C** | **Inlet Temp at ≤ 800 ppm HC slip** |
|---|---|---|---|---|---|---|
| 17 (Comparative) | 6:1 | 0.883 (25) | 0 | 0.353 (10) | 284.4 | 292.6 |
| 18 | 6:1 | 0.883 (25) | 30.5 (0.5) | 0.353 (10) | 267.0 | 274.0 |

## Claims

1. A diesel oxidation catalyst for use in an exhaust system of a heavy-duty diesel engine for: oxidising carbon monoxide (CO) and hydrocarbons (HC) to carbon dioxide (CO₂) and water (H₂O), including the generation of an exotherm from HC for heating a filter substrate in the exhaust system disposed downstream from the oxidation catalyst; and oxidising nitrogen monoxide (NO) to nitrogen dioxide (NO₂) in exhaust gas emitted from the heavy-duty diesel engine, which diesel oxidation catalyst comprising:
(i) a monolith substrate, preferably a flow-through substrate, having a first substrate end and a second substrate end and an axial length extending therebetween;
(ii) a first washcoat layer supported at least in part directly by a surface of the monolith substrate and extending from the first substrate end to less than the axial length of the monolith substrate, which first washcoat layer comprising a large pore aluminosilicate zeolite including a ring size of twelve tetrahedral atoms;
(iii) a first washcoat zone extending from the first substrate end to less than the axial length of the monolith substrate and comprising both platinum and palladium and a particulate refractory metal oxide support material, wherein a platinum to palladium weight ratio in the first washcoat zone is 10:1 to 2:1 at a total platinum group metal loading of 0.353 to 1.41 g/L (10 to 40 g/ft³); and
(iv) a second washcoat layer supported at least in part directly by a surface of the monolith substrate and extending from the second substrate end to less than the axial length of the monolith substrate, which second washcoat layer comprising a weight ratio of platinum to palladium of 1:0 to 2:1 and a particulate refractory metal oxide material for supporting the platinum or both the platinum and palladium, wherein the second washcoat layer axially abuts with the first washcoat layer, the first washcoat layer overlaps the second washcoat layer or the second washcoat layer overlaps the first washcoat layer,
wherein an axial length of the first washcoat zone is less than an axial length of the second washcoat layer; a total platinum group metal loading in g/L (g/ft³) in the first washcoat zone is at least twice the total platinum group metal loading in the second washcoat layer; a total platinum group metal loading on the monolith substrate as a whole is from 0.247 to 0.706 g/L (7 to 20 g/ft³); and the zeolite loading in the first washcoat layer is 6.10 to 91.54 g/L (0.1 to 1.5 g/in³).

2. A diesel oxidation catalyst according to claim 1, wherein the first washcoat zone consists of the first washcoat layer and the zeolite loading in the first washcoat layer is 6.10 to 61.02 g/L (0.1 to 1.0 g/in³).

3. A diesel oxidation catalyst according to claim 2, wherein the first washcoat zone extends for 15 to 45% of the axial length of the monolith substrate from the first substrate end.

4. A diesel oxidation catalyst according to claim 1, wherein the first washcoat zone consists of a third washcoat layer disposed in a layer directly on top of the first washcoat layer, wherein, as coated, the first washcoat layer comprises no platinum group metal.

5. A diesel oxidation catalyst according to claim 4, wherein the third washcoat layer extends for 15 to 45% of the axial length of the monolith substrate from the first substrate end.

6. A diesel oxidation catalyst according to claim 4 or 5, wherein the first washcoat layer is axially longer than the third washcoat layer and the second washcoat layer overlaps the first washcoat layer.

7. A diesel oxidation catalyst according to claim 4, 5 or 6, wherein the first washcoat layer extends for 30% to 60% of the axial length of the monolith substrate.

8. A diesel oxidation catalyst according to any one of the preceding claims, wherein the second washcoat layer extends from 85% to 55% of the axial length of the monolith substrate.

9. A diesel oxidation catalyst according to any one of the preceding claims, wherein the large pore aluminosilicate zeolite has the *BEA, FAU or MOR framework type, preferably *BEA.

10. A diesel oxidation catalyst according to any one of the preceding claims, wherein a total washcoat loading in the first washcoat zone is 30.51 to 152.56 g/L (0.5 to 2.5 g/in³).

11. A diesel oxidation catalyst according to any one of the preceding claims, wherein the first washcoat zone comprises strontium or barium, preferably barium.

12. A diesel oxidation catalyst according to any one of the preceding claims, wherein the first washcoat zone comprises a catalyst layer having an exposed upper surface and a supporting lower surface and non-uniform distribution of palladium which decreases from the exposed upper surface to the supporting lower surface in a direction perpendicular to a surface of the monolith substrate.

13. An exhaust system of a heavy-duty diesel engine comprising a diesel oxidation catalyst according to any one of the preceding claims and a filter substrate disposed downstream from the diesel oxidation catalyst, wherein the first substrate end of the diesel oxidation catalyst is oriented to the upstream side.

14. A heavy-duty diesel engine comprising an exhaust system according to claim 13.

15. Use of a diesel oxidation catalyst comprising: (i) a monolith substrate, preferably a flow-through substrate, having a first substrate end and a second substrate end and an axial length extending therebetween; (ii) a first washcoat layer supported at least in part directly by a surface of the monolith substrate and extending from the first substrate end to less than the axial length of the monolith substrate, which first washcoat layer comprising a large pore aluminosilicate zeolite including a ring size of twelve tetrahedral atoms; (iii) a first washcoat zone extending from the first substrate end to less than the axial length of the monolith substrate and comprising both platinum and palladium and a particulate refractory metal oxide support material, wherein a platinum to palladium weight ratio in the first washcoat zone is 10:1 to 2:1 at a total platinum group metal loading of 0.353 to 1.41 g/L (10 to 40 g/ft³); and (iv) a second washcoat layer supported at least in part directly by a surface of the monolith substrate and extending from the second substrate end to less than the axial length of the monolith substrate, which second washcoat layer comprising a weight ratio of platinum to palladium of 1:0 to 2:1 and a particulate refractory metal oxide material for supporting the platinum or both the platinum and palladium, wherein the second washcoat layer axially abuts with the first washcoat layer, the first washcoat layer overlaps the second washcoat layer or the second washcoat layer overlaps the first washcoat layer, wherein an axial length of the first washcoat zone is less than an axial length of the second washcoat layer; a total platinum group metal loading in g/L (g/ft³) in the first washcoat zone is at least twice the total platinum group metal loading in the second washcoat layer; a total platinum group metal loading on the monolith substrate as a whole is from 0.247 to 0.706 g/L (7 to 20 g/ft³); and the zeolite loading in the first washcoat layer is 6.10 to 91.54 g/L (0.1 to 1.5 g/in³), for generating an exotherm from hydrocarbons in an exhaust gas of a heavy-duty diesel engine.

## Patentansprüche

1. Dieseloxidationskatalysator zur Verwendung in einem Abgassystem eines Nutzfahrzeugdieselmotors zum: Oxidieren von Kohlenmonoxid (CO) und Kohlenwasserstoffen (HC) zu Kohlendioxid (CO₂) und Wasser (H₂O), einschließlich der Erzeugung einer Exothermie aus HC zum Erhitzen eines Filtersubstrats in dem Abgassystem, das stromabwärts des Oxidationskatalysators angeordnet ist; und Oxidieren von Stickstoffmonoxid (NO) zu Stickstoffdioxid (NO₂) in dem Abgas, das von dem Nutzfahrzeugdieselmotor ausgestoßen wird, der Dieseloxidationskatalysator umfassend:
(i) ein Monolithsubstrat, vorzugsweise ein Durchflusssubstrat, das ein erstes Substratende und ein zweites Substratende und eine axiale Länge aufweist, die sich dazwischen erstreckt;
(ii) eine erste Washcoat-Schicht, die mindestens teilweise direkt durch eine Oberfläche des Monolithsubstrats getragen wird und sich von dem ersten Substratende zu weniger als der axialen Länge des Monolithsubstrats erstreckt, die erste Washcoat-Schicht umfassend einen großporigen Alumosilikatzeolith einschließlich einer Ringgröße von zwölf tetraedrischen Atomen;
(iii) eine erste Washcoat-Zone, die sich von dem ersten Substratende zu weniger als der axialen Länge des Monolithsubstrats erstreckt und sowohl Platin als auch Palladium und ein partikuläres feuerfestes Metalloxidträgermaterial umfasst, wobei ein Gewichtsverhältnis von Platin zu Palladium in der ersten Washcoat-Zone 10 : 1 bis 2 : 1 bei einer Platingruppenmetallgesamtbeladung von 0,353 bis 1,41 g/L (10 bis 40 g/ft³) beträgt; und
(iv) eine zweite Washcoat-Schicht, die mindestens teilweise direkt durch eine Oberfläche des Monolithsubstrats getragen wird und sich von dem zweiten Substratende zu weniger als der axialen Länge des Monolithsubstrats erstreckt, die zweite Washcoat-Schicht umfassend ein Gewichtsverhältnis von Platin zu Palladium von 1 : 0 bis 2 : 1 und ein partikuläres feuerfestes Metalloxidmaterial zum Tragen des Platins oder sowohl des Platins als auch des Palladiums, wobei die zweite Washcoat-Schicht an die erste Washcoat-Schicht axial angrenzt, die erste Washcoat-Schicht die zweite Washcoat-Schicht überlappt oder die zweite Washcoat-Schicht die erste Washcoat-Schicht überlappt,
wobei eine axiale Länge der ersten Washcoat-Zone kleiner als eine axiale Länge der zweiten Washcoat-Schicht ist; eine Platingruppenmetallgesamtbeladung in g/L (g/ft³) in der ersten Washcoat-Zone mindestens das Doppelte der Platingruppenmetallgesamtbeladung in der zweiten Washcoat-Schicht beträgt; eine Platingruppenmetallgesamtbeladung auf dem Monolithsubstrat in seiner Ganzheit 0,247 bis 0,706 g/L (7 bis 20 g/ft³) beträgt; und die Zeolithbeladung in der ersten Washcoat-Schicht 6,10 bis 91,54 g/L (0,1 bis 1,5 g/in³) beträgt.

2. Dieseloxidationskatalysator nach Anspruch 1, wobei die erste Washcoat-Zone aus der ersten Washcoat-Schicht besteht und die Zeolithbeladung in der ersten Washcoat-Schicht 6,10 bis 61,02 g/L (0,1 bis 1,0 g/in³) beträgt.

3. Dieseloxidationskatalysator nach Anspruch 2, wobei sich die erste Washcoat-Zone über 15 bis 45 % der axialen Länge des Monolithsubstrats von dem ersten Substratende erstreckt.

4. Dieseloxidationskatalysator nach Anspruch 1, wobei die erste Washcoat-Zone aus einer dritten Washcoat-Schicht besteht, die in einer Schicht direkt auf der ersten Washcoat-Schicht angeordnet ist, wobei die erste Washcoat-Schicht, wenn beschichtet, kein Platingruppenmetall umfasst.

5. Dieseloxidationskatalysator nach Anspruch 4, wobei sich die dritte Washcoat-Schicht über 15 bis 45 % der axialen Länge des Monolithsubstrats von dem ersten Substratende erstreckt.

6. Dieseloxidationskatalysator nach Anspruch 4 oder 5, wobei die erste Washcoat-Schicht axial länger als die dritte Washcoat-Schicht ist und die zweite Washcoat-Schicht die erste Washcoat-Schicht überlappt.

7. Dieseloxidationskatalysator nach Anspruch 4, 5 oder 6, wobei sich die erste Washcoat-Schicht über 30 % bis 60 % der axialen Länge des Monolithsubstrats erstreckt.

8. Dieseloxidationskatalysator nach einem der vorstehenden Ansprüche, wobei sich die zweite Washcoat-Schicht über 85 % bis 55 % der axialen Länge des Monolithsubstrats erstreckt.

9. Dieseloxidationskatalysator nach einem der vorstehenden Ansprüche, wobei der großporige Alumosilikatzeolith den Gerüsttyp *BEA, FAU oder MOR, vorzugsweise *BEA, aufweist.

10. Dieseloxidationskatalysator nach einem der vorstehenden Ansprüche, wobei eine Washcoat-Gesamtbeladung in der ersten Washcoat-Zone 30,51 bis 152,56 g/L (0,5-2,5 g/ft³) beträgt.

11. Dieseloxidationskatalysator nach einem der vorstehenden Ansprüche, wobei die erste Washcoat-Zone Strontium oder Barium, vorzugsweise Barium, umfasst.

12. Dieseloxidationskatalysator nach einem der vorstehenden Ansprüche, wobei die erste Washcoat-Zone eine Katalysatorschicht umfasst, die eine freiliegende obere Oberfläche und eine tragende untere Oberfläche und eine nicht gleichmäßige Palladiumverteilung aufweist, die von der freiliegenden oberen Oberfläche zu der tragenden unteren Oberfläche in einer Richtung senkrecht zu einer Oberfläche des Monolithsubstrats abnimmt.

13. Abgassystem eines Nutzfahrzeugdieselmotors, umfassend einen Dieseloxidationskatalysator nach einem der vorstehenden Ansprüche und ein Filtersubstrat, das stromabwärts des Dieseloxidationskatalysators angeordnet ist, wobei das erste Substratende des Dieseloxidationskatalysators zu der stromaufwärtigen Seite ausgerichtet ist.

14. Nutzfahrzeugdieselmotor, umfassend ein Abgassystem nach Anspruch 13.

15. Verwendung eines Dieseloxidationskatalysators, umfassend: (i) ein Monolithsubstrat, vorzugsweise ein Durchflusssubstrat, das ein erstes Substratende und ein zweites Substratende und eine axiale Länge aufweist, die sich dazwischen erstreckt; (ii) eine erste Washcoat-Schicht, die mindestens teilweise direkt durch eine Oberfläche des Monolithsubstrats getragen wird und sich von dem ersten Substratende zu weniger als der axialen Länge des Monolithsubstrats erstreckt, die erste Washcoat-Schicht umfassend einen großporigen Alumosilikatzeolith einschließlich einer Ringgröße von zwölf tetraedrischen Atomen; (iii) eine erste Washcoat-Zone, die sich von dem ersten Substratende zu weniger als der axialen Länge des Monolithsubstrats erstreckt und sowohl Platin als auch Palladium und ein partikuläres feuerfestes Metalloxidträgermaterial umfasst, wobei ein Gewichtsverhältnis von Platin zu Palladium in der ersten Washcoat-Zone 10 : 1 bis 2 : 1 bei einer Platingruppenmetallgesamtbeladung von 0,353 bis 1,41 g/L (10 bis 40 g/ft³) beträgt; und (iv) eine zweite Washcoat-Schicht, die mindestens teilweise direkt durch eine Oberfläche des Monolithsubstrats getragen wird und sich von dem zweiten Substratende zu weniger als der axialen Länge des Monolithsubstrats erstreckt, die zweite Washcoat-Schicht umfassend ein Gewichtsverhältnis von Platin zu Palladium von 1 : 0 bis 2 : 1 und ein partikuläres feuerfestes Metalloxidmaterial zum Tragen des Platins oder sowohl des Platins als auch des Palladiums, wobei die zweite Washcoat-Schicht an die erste Washcoat-Schicht axial angrenzt, die erste Washcoat-Schicht die zweite Washcoat-Schicht überlappt oder die zweite Washcoat-Schicht die erste Washcoat-Schicht überlappt, wobei eine axiale Länge der ersten Washcoat-Zone weniger als eine axiale Länge der zweiten Washcoat-Zone beträgt; eine Platingruppenmetallgesamtbeladung in g/L (g/ft³) in der ersten Washcoat-Zone mindestens das Doppelte der Platingruppenmetallgesamtbeladung in der zweiten Washcoat-Schicht beträgt; eine Platingruppenmetallgesamtbeladung auf dem Monolithsubstrat in seiner Ganzheit 0,247 bis 0,706 g/L (7 bis 20 g/ft³) beträgt; und die Zeolithbeladung in der ersten Washcoat-Schicht 6,10 bis 91,54 g/L (0,1 bis 1,5 g/in³) beträgt, zum Erzeugen einer Exothermie aus Kohlenwasserstoffen in dem Abgas eines Nutzfahrzeugdieselmotors.

## Revendications

1. Catalyseur d'oxydation diesel pour utilisation dans un système d'échappement d'un moteur diesel industriel pour : l'oxydation de monoxyde de carbone (CO) et d'hydrocarbures (HC) en dioxyde de carbone (CO₂) et eau (H₂O), comportant la génération d'un exotherme à partir de HC permettant de chauffer un substrat de filtre dans le système d'échappement disposé en aval du catalyseur d'oxydation ; et l'oxydation de monoxyde d'azote (NO) en dioxyde d'azote (NO₂) dans un gaz d'échappement émis par le moteur diesel industriel, ce catalyseur d'oxydation diesel comprenant :
(i) un substrat monolithique, de préférence un substrat à écoulement traversant, ayant une première extrémité de substrat et une seconde extrémité de substrat et une longueur axiale s'étendant entre elles ;
(ii) un premier feuillet de couche d'imprégnation supporté au moins en partie directement par une surface du substrat monolithique et s'étendant de la première extrémité de substrat jusqu'à moins de la longueur axiale du substrat monolithique, ce premier feuillet de couche d'imprégnation comprenant une zéolite d'aluminosilicate à larges pores comportant une taille de cycle de douze atomes tétraédriques ;
(iii) une première zone de couche d'imprégnation s'étendant de la première extrémité de substrat jusqu'à moins de la longueur axiale du substrat monolithique et comprenant à la fois du platine et du palladium et un matériau de support en oxyde de métal réfractaire particulaire, dans lequel un rapport pondéral du platine au palladium dans la première zone de couche d'imprégnation va de 10:1 à 2:1 à un chargement total en métal du groupe du platine de 0,353 à 1,41 g/L (10 à 40 g/pied³) ; et
(iv) un deuxième feuillet de couche d'imprégnation supporté au moins en partie directement par une surface du substrat monolithique et s'étendant de la seconde extrémité de substrat jusqu'à moins de la longueur axiale du substrat monolithique, ce deuxième feuillet de couche d'imprégnation comprenant un rapport pondéral du platine au palladium de 1:0 à 2:1 et un matériau d'oxyde de métal réfractaire particulaire permettant de supporter le platine ou à la fois le platine et le palladium, dans lequel le deuxième feuillet de couche d'imprégnation vient en butée axialement avec le premier feuillet de couche d'imprégnation, le premier feuillet de couche d'imprégnation chevauche le deuxième feuillet de couche d'imprégnation ou le deuxième feuillet de couche d'imprégnation chevauche le premier feuillet de couche d'imprégnation,
dans lequel une longueur axiale de la première zone de couche d'imprégnation est inférieure à une longueur axiale du deuxième feuillet de couche d'imprégnation ; un chargement total en métal du groupe du platine en g/L (g/pied³) dans la première zone de couche d'imprégnation vaut au moins deux fois le chargement total en métal du groupe du platine dans le deuxième feuillet de couche d'imprégnation ; un chargement total en métal du groupe du platine sur le substrat monolithique dans son ensemble va de 0,247 à 0,706 g/L (7 à 20 g/pied³) ; et le chargement en zéolite dans le premier feuillet de couche d'imprégnation va de 6,10 à 91,54 g/L (0,1 à 1,5 g/po³).

2. Catalyseur d'oxydation diesel selon la revendication 1, dans lequel la première zone de couche d'imprégnation est constituée du premier feuillet de couche d'imprégnation et le chargement en zéolite dans le premier feuillet de couche d'imprégnation va de 6,10 à 61,02 g/L (0,1 à 1,0 g/po³).

3. Catalyseur d'oxydation diesel selon la revendication 2, dans lequel la première zone de couche d'imprégnation s'étend sur 15 à 45 % de la longueur axiale du substrat monolithique à partir de la première extrémité de substrat.

4. Catalyseur d'oxydation diesel selon la revendication 1, dans lequel la première zone de couche d'imprégnation est constituée d'un troisième feuillet de couche d'imprégnation disposé dans une couche directement au-dessus du premier feuillet de couche d'imprégnation, dans lequel, tel que revêtu, le premier feuillet de couche d'imprégnation ne comprend aucun métal du groupe du platine.

5. Catalyseur d'oxydation diesel selon la revendication 4, dans lequel le troisième feuillet de couche d'imprégnation s'étend sur 15 à 45 % de la longueur axiale du substrat monolithique à partir de la première extrémité de substrat.

6. Catalyseur d'oxydation diesel selon la revendication 4 ou 5, dans lequel le premier feuillet de couche d'imprégnation est axialement plus long que le troisième feuillet de couche d'imprégnation et le deuxième feuillet de couche d'imprégnation chevauche le premier feuillet de couche d'imprégnation.

7. Catalyseur d'oxydation diesel selon la revendication 4, 5 ou 6, dans lequel le premier feuillet de couche d'imprégnation s'étend sur 30 % à 60 % de la longueur axiale du substrat monolithique.

8. Catalyseur d'oxydation diesel selon l'une quelconque des revendications précédentes, dans lequel le deuxième feuillet de couche d'imprégnation s'étend à partir de 85 % à 55 % de la longueur axiale du substrat monolithique.

9. Catalyseur d'oxydation diesel selon l'une quelconque des revendications précédentes, dans lequel la zéolite d'aluminosilicate à larges pores a le type d'ossature *BEA, FAU ou MOR, de préférence *BEA.

10. Catalyseur d'oxydation diesel selon l'une quelconque des revendications précédentes, dans lequel un chargement total en couche d'imprégnation dans la première zone de couche d'imprégnation va de 30,51 à 152,56 g/L (0,5 à 2,5 g/po³).

11. Catalyseur d'oxydation diesel selon l'une quelconque des revendications précédentes, dans lequel la première zone de couche d'imprégnation comprend du strontium ou du baryum, de préférence du baryum.

12. Catalyseur d'oxydation diesel selon l'une quelconque des revendications précédentes, dans lequel la première zone de couche d'imprégnation comprend une couche de catalyseur ayant une surface supérieure exposée et une surface inférieure de support et une répartition non uniforme de palladium qui diminue de la surface supérieure exposée à la surface inférieure de support dans une direction perpendiculaire à une surface du substrat monolithique.

13. Système d'échappement d'un moteur diesel industriel comprenant un catalyseur d'oxydation diesel selon l'une quelconque des revendications précédentes et un substrat de filtre disposé en aval du catalyseur d'oxydation diesel, dans lequel la première extrémité de substrat du catalyseur d'oxydation diesel est orientée vers le côté en amont.

14. Moteur diesel industriel comprenant un système d'échappement selon la revendication 13.

15. Utilisation d'un catalyseur d'oxydation diesel comprenant : (i) un substrat monolithique, de préférence un substrat à écoulement traversant, ayant une première extrémité de substrat et une seconde extrémité de substrat et une longueur axiale s'étendant entre elles ; (ii) un premier feuillet de couche d'imprégnation supporté au moins en partie directement par une surface du substrat monolithique et s'étendant de la première extrémité de substrat jusqu'à moins de la longueur axiale du substrat monolithique, ce premier feuillet de couche d'imprégnation comprenant une zéolite d'aluminosilicate à larges pores comportant une taille de cycle de douze atomes tétraédriques ; (iii) une première zone de couche d'imprégnation s'étendant de la première extrémité de substrat jusqu'à moins de la longueur axiale du substrat monolithique et comprenant à la fois du platine et du palladium et un matériau de support en oxyde de métal réfractaire particulaire, dans laquelle un rapport pondéral du platine au palladium dans la première zone de couche d'imprégnation va de 10:1 à 2:1 à un chargement total en métal du groupe du platine de 0,353 à 1,41 g/L (10 à 40 g/pied³) ; et (iv) un deuxième feuillet de couche d'imprégnation supporté au moins en partie directement par une surface du substrat monolithique et s'étendant de la seconde extrémité de substrat jusqu'à moins de la longueur axiale du substrat monolithique, ce deuxième feuillet de couche d'imprégnation comprenant un rapport pondéral du platine au palladium de 1:0 à 2:1 et un matériau d'oxyde de métal réfractaire particulaire permettant de supporter le platine ou à la fois le platine et le palladium, dans laquelle le deuxième feuillet de couche d'imprégnation vient en butée axialement avec le premier feuillet de couche d'imprégnation, le premier feuillet de couche d'imprégnation chevauche le deuxième feuillet de couche d'imprégnation ou le deuxième feuillet de couche d'imprégnation chevauche le premier feuillet de couche d'imprégnation, dans laquelle une longueur axiale de la première zone de couche d'imprégnation est inférieure à une longueur axiale du deuxième feuillet de couche d'imprégnation ;
un chargement total en métal du groupe du platine en g/L (g/pied³) dans la première zone de couche d'imprégnation vaut au moins deux fois le chargement total en métal du groupe du platine dans le deuxième feuillet de couche d'imprégnation ; un chargement total en métal du groupe du platine sur le substrat monolithique dans son ensemble va de 0,247 à 0,706 g/L (7 à 20 g/pied³) ; et le chargement en zéolite dans le premier feuillet de couche d'imprégnation va de 6,10 à 91,54 g/L (0,1 à 1,5 g/po³), pour la génération d'un exotherme à partir d'hydrocarbures dans un gaz d'échappement d'un moteur diesel industriel.
